# EUROPÄISCHE PATENTSCHRIFT

(11) **EP 1 075 671 B1**
(45) Veröffentlichungstag und Bekanntmachung des Hinweises auf die Patenterteilung: **30.06.2004**
(21) Anmeldenummer: 99920717.8
(22) Anmeldetag: 20.04.1999
(51) Int. Cl.: G02F 1/37, G02F 1/35

(54) **VERFAHREN UND VORRICHTUNG ZUR FREQUENZKONVERSION, INSBESONDERE ZUR FREQUENZVERDOPPLUNG VON FESTFREQUENZLASERN**
METHOD AND DEVICE FOR FREQUENCY CONVERSION, ESPECIALLY FOR DOUBLING THE FREQUENCY OF FIXED-FREQUENCY LASERS
PROCEDE ET DISPOSITIF DE CONVERSION DE FREQUENCE, NOTAMMENT DE DOUBLEMENT DE LA FREQUENCE DE LASERS A FREQUENCE FIXE

(30) Priorität: 20.04.1998 DE 19818612
(43) Veröffentlichungstag der Anmeldung: 14.02.2001
(73) Patentinhaber: Spectra-Physics GmbH, 64291 Darmstadt (DE)
(72) Erfinder: ZANGER, Eckhard, D-14554 Seddin (DE); GRIES, Wolfgang, D-12159 Berlin (DE)
(74) Vertreter: Hengelhaupt, Jürgen D., Dipl.-Ing.
(86) Internationale Anmeldenummer: PCT/EP1999/002657
(87) Internationale Veröffentlichungsnummer: WO 1999/054782

(56) Entgegenhaltungen:
- SCHNEIDER K ET AL: "1.1-W single-frequency 532-nm radiation by second-harmonic generation of a miniature Nd:YAG ring laser" OPTICS LETTERS, 15 DEC. 1996, OPT. SOC. AMERICA, USA, Bd. 21, Nr. 24, Seiten 1999-2001, XP000679217 ISSN: 0146-9592 in der Anmeldung erwähnt
- SCHILLER S ET AL: "Self-pulsing in doubly resonant second harmonic generation" QELS - PROCEEDINGS OF THE QUANTUM ELECTRONICS AND LASER SCIENCE CONFERENCE, BALTIMORE, MAY 2-7, 1993, PAPER QWF1, 2. Mai 1993 (1993-05-02), Seiten 145-146, XP000392841
- PATENT ABSTRACTS OF JAPAN vol. 018, no. 295 (P-1748), 6. Juni 1994 (1994-06-06) & JP 06 059301 A (ASAHI GLASS CO LTD), 4. März 1994 (1994-03-04)
- SERKLAND D ET AL: "Monolithic total internal reflection resonator for external resonant second harmonic generation of 2018 nm" CLEO - PROCEEDINGS OF THE CONFERENCE ON LASERS AND ELECTRO OPTICS (CLEO), ANAHEIM, MAY 10 - 15, 1992, PAPER CTHN6, Bd. 12, 10. Mai 1992 (1992-05-10), Seiten 530-531, XP000351601 INSTITUTE OF ELECTRICAL AND ELECTRONICS ENGINEERS ISBN: 1-55752-237-5

## Beschreibung

Die Erfindung betrifft ein Verfahren und eine Vorrichtung zur Frequenzkonversion festfrequenter Laserstrahlung in einem halbmonolithischen Resonator gemäß den Ansprüchen 1 und 9.

Es sind bereits eine Vielzahl von Verfahren und Vorrichtungen bekannt, die eine Frequenzkonversion von kontinuierlicher Laserstrahlung mittels nichtlinearer Kristalle, insbesondere die Erzeugung der 2.Oberwelle (Frequenzverdopplung) aus einer kohärenten Grundwellen-strahlung, mit dem Ziel einer Erhöhung der Konversionseffizienz beschreiben.

Die "klassische Anordnung" zur Frequenzkonversion von Laserstrahlung, wie sie u.a. beschrieben ist in den Veröffentlichungen von M.Brieger et al.: "Enhancement of Single Frequency SHG in a Passive Ring Resonator" Opt. Commun. 38 (1981) p. 423; C.S.Adams et al. "Tunable narrow linewidth ultra-violet light generation...", Opt. Commun. 90 (1992) p 89 ;S.Bourzeix et al.: "Efficient frequency doubling of a continous wave ...", Opt. Commun. 99 (1993) p 89, besteht aus einem Resonator in Form eines Doppel-Z, der aus vier Spiegeln gebildet wird, von denen mindestens zwei einen Krümmungsradius besitzen, und einem nichtlinearen Kristall. Ein erster Spiegel ist auf einem Piezoelement montiert und dient der Abstimmung der Resonatorlänge auf Resonanz mit der einfallenden Lichtwelle. Der von einem dritten Spiegel reflektierte Teil der eingestrahlten Welle wird mit einem Detektor registriert. Mit üblichen Verfahren (Hänsch-Couillaud, Pound-Drever) kann daraus ein Regelsignal zur aktiven Resonatorstabilisierung gewonnen werden. Die Spiegelabstände, Krümmungsradien, Beschichtungen sowie der Kristall sind so gestaltet, daß
a) der Resonator optisch stabil ist,
b) sich zwischen den gekrümmten zwei Spiegeln am Ort des nichtlinearen Kristalls eine Strahltaille ausbildet, deren Größe optimal für eine effiziente Konversion ist,
c) der durch die gekrümmten Spiegel hervorgerufene Astigmatismus der zweiten Strahltaille zwischen weiteren zwei Spiegeln (dritter und vierter Spiegel), durch den brewstergeschnittenen Kristall kompensiert wird,
d) drei der Spiegel eine möglichst hohe Reflektivität für die Grundwelle besitzen,
e) einer der Spiegel für die erzeugte Harmonische eine möglichst hohe Transmission besitzt,
f) der Reflexionsgrad des Einkoppelspiegels so bemessen ist, daß die Resonanzüberhöhung der Grundwelle möglichst hoch ist, was bei Impedanzanpassung R=1-V (R: Reflexionsgrad, V: passive Resonatorverluste) der Fall ist,
g) für den nichtlinearen Kristall die Bedingung für Phasenanpassung erfüllt ist.

Mit solchen Anordnungen werden typischerweise Konversionseffizienzen zwischen 10% und 30% erreicht.

Da in dieser Anordnung vier justierbare Spiegelhalter benötigt werden, ist der mechanische Aufwand relativ hoch. Da hochreflektierende Spiegel immer eine Resttransmission aufweisen, können die passiven Verluste dieser Anordnung nicht beliebig reduziert werden, wodurch dem Verstärkungsfaktor des Resonators eine Obergrenze gesetzt ist. Insgesamt sind die Anordnungen mechanisch zu instabil und zu groß, um sie als Module für die Frequenzkonversion, insbesondere der Frequenzverdopplung,für Festfrequenzlaser in industrienahen Anwendungen einsetzen zu können.

In anderen Veröffentlichungen, so in den US 5,027,361, 5,227,911, 4,731,787, 4,797,896, werden monolithische oder, wie in der US 5,007,065 beschrieben, werden halbmonolithische Anordnungen benutzt.

Gegenüber den diskret aufgebauten Resonatoren haben diese Anordnungen verschiedene Vorteile:
a) Sie sind mechanisch wesentlich stabiler und haben damit eine geringere Anfälligkeit gegen Störungen von außen.
b) Sie haben weniger Verluste durch eine geringere Anzahl von Grenzflächen im Resonator.
c) Teure präzisionsoptische Teile können entfallen.

Mit diesen Anordnungen werden Verdopplungseffizienzen bis zu 80% erreicht. Allerdings ist die Herstellung der Kristalle, die monolithische Resonatoren (US 5,027,361, 5,227,911, 4,731,787, 4,797,896) bilden, sehr aufwendig (sphärisch geschliffene Oberflächen, spezielle Beschichtungen usw.). Diese Kristalle werden nicht auf dem Markt gehandelt und können nur in speziellen Labors hergestellt werden. Teilweise werden bei diesen Anordnungen auch Eigenschaften von Kristallen benutzt, die nur wenige Materialien erfüllen, wie zum Beispiel der hohe Koeffizient für den elektrooptischen Effekt beim Kristallmaterial Lithiumniobat, der zum Abstimmen des Resonators mit einer elektrischen Spannung benutzt wird (K.Schneider et al.:"1.1-W single frequency532nm radiation by second-harmonic generation of a miniature Nd:YAG ring laser", Optics Letters Vol 21 No.24, (1996) p.1999). Die Beschränkung auf solche Kristalle führt dann zu einer starken Einschränkung des Wellenlängenbereiches, der damit verdoppelt werden kann. Besonders zur Erzeugung der 2. Harmonischen im Bereich unter 300 nm sind diese Anordnungen nicht verwendbar.

In dem Patent US 5,007,065 wird eine halbmonolithische Resonatorform beschrieben, die zusammen mit der vorgeschlagenen Form eines Lasermediums als aktiver Laserresonator ausgelegt worden ist. In der beschriebenen Form läßt sich dieser Resonator nicht als passiver Resonator zur Erzeugung von optischen Harmonischen in einem optisch nichtlinearen Kristall verwenden.

Aufgabe der Erfindung ist es, ein gattungsgemäßes Verfahren und eine Vorrichtung zu entwickeln, mit denen die Frequenzkonversion, insbesondere die Erzeugung der zweiten Harmonischen, von kontinuierlicher festfrequenter Laserstrahlung unter Vermeidung der beschriebenen Nachteile mit hoher Effizienz, mit einer wesentlich erhöhten optomechanischen Stabilität und einer stark vereinfachten Produzierbarkeit gewährleistet werden. Insbesondere soll die effiziente Erzeugung von Wellenlängen unterhalb 300nm für industrielle Anwendungen ermöglicht werden.

Die Lösung der Aufgabe ergibt sich aus den Merkmalen der Ansprüche 1 und 9.

Aus der Anwendung der Erfindung ergeben sich gegenüber den bekannten Anordnungen insbesondere die folgenden Vorteile:
1.Die Anordnung der Bauelemente ergibt eine äußerst kompakte Bauform der Konversionseinheit und kann daher in einem Festfrequenzlaser integriert werden, ohne die Bauform des Systems erheblich zu vergrößern.
2.Die Form des optisch nichtlinearen Kristalls weist ausschließlich plane Flächen aus und ist daher im Vergleich zu den konkurrierenden Verfahren einfach und ökonomisch in großen Stückzahlen herstellbar.
3.Die Einfallswinkel der Grundwelle an den brechenden Flächen im Kristall sowie die Einfallswinkel an dem gekrümmten Spiegel sind klein, so daß der Astigmatismus vernachlässigt werden kann.
4.Die aus der reduzierten Anzahl der Bauelemente resultierende Verringerung der passiven Verluste bewirkt eine wesentlich verbesserte Konversionseffizienz von Grundwelle zu Oberwelle.
5.Die aus der Kompaktheit und der reduzierten Anzahl von Bauelementen resultierende Stabilität, sowie die Piezoverstellung der Resonatorlänge, lassen erstmalig eine industrienahe Anwendung von kontinuierlicher UV-Laserstrahlung mit festen Wellenlängen unter 300 nm zu.
6.Durch die gegenüber dem klassischen Aufbau geringere Resonatorlänge wird der Freie Spektralbereich des Resonators deutlich größer. Damit erhöht sich die Akzeptanzbreite des Resonators (bei gleichbleibender Resonatorgüte) bezüglich der Frequenzbandbreite der einfallenden Strahlung. Daher können auch Laserstrahlquellen schlechterer Qualität mit dieser Anordnung konvertiert werden.

In Abgrenzung zu dem im Patent US 5,007,065 .beschriebenen Ringlaser handelt es sich bei der vorliegenden Erfindung nicht um einen aktiven Laserresonator, bei dem mit Hilfe des in eine geeignete Form gebrachten Lasermediums Laserstrahlung erzeugt wird, sondern um einen passiven Ringresonator, in dem die durch die resonante Ringform erzeugte Intensitätsüberhöhung der von außen eingestrahlten Grundwellenstrahlung zur Frequenzkonversion, insbesondere der Erzeugung der zweiten Oberwelle, genutzt wird. Zudem wird im Unterschied zum genannten Patent ein einzelner Piezotranslator so zwischen den optischen Elementen angeordnet, daß eines der Elemente als feste Basis gegenüber dem zur Resonatorlängenoptimierung verstellbaren gegenüberliegenden Element dient.

Die Erfindung wird nachfolgend in einem Ausführungsbeispiel eines passiven Ringresonators nach der Erfindung anhand einer Zeichnung näher erläutert. Es zeigen:
- Fig. 1:: die schematische Darstellung einer Ausführungsform eines passiven Ringresonators nach der Erfindung und
- Fig. 2:: die schematische Darstellung des Kristalls im Ringresonator nach Fig. 1.

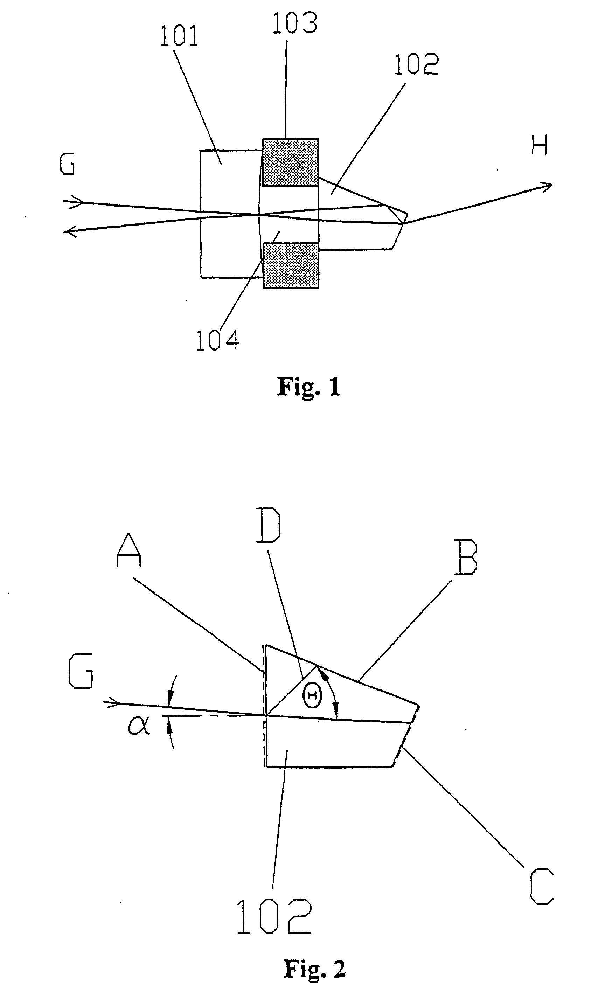

Der nach dem erfindungsgemäßen Verfahren entwickelte passive Ringresonator besteht gemäß der Darstellung in der Fig. 1 aus einem im allgemeinen sphärischen Spiegel 101 und aus einem unsymmetrischen optisch nichtlinearen Kristall 102. Die Anordnung gewährleistet einen resonanten ringförmigen Umlauf einer eingekoppelten Laserstrahlung. Der Krümmungsradius des Spiegels 101 wird so gewählt, daß die Größe der Strahltaille der umlaufenden Grundwelle optimal bezüglich der Effizienz der Frequenzkonversion ist. Diese optimale Größe der Strahltaille stellt einen Kompromiß zwischen den sich widersprechenden Erfordernissen möglichst hoher Leistungsdichte und möglichst geringer Divergenz der Grundwellenstrahlung dar und ist von Materialeigenschaften wie dem nichtlinearen Koeffizienten und der Winkelakzeptanz des nichtlinearen kristalls abhängig. Zwischen dem Kristall 102 und dem Spiegel 101 wird ein ringförmiger Piezoversteller 103 mit einer zentralen Öffnung 104 zur Durchstrahlung der Resonatorstrahlung angeordnet. Die Anordnung erfolgt so, daß entweder der Spiegel 101 oder der Kristall 102 am Piezoversteller 103 so beweglich befestigt ist, daß die Resonatorlänge gegenüber einer Störung der Resonanzlänge geeignet optimiert werden kann. Jeweils eines der optischen Elemente, entweder der Spiegel 101 oder der Kristall 102, bilden eine feste Basis gegenüber dem zur Resonatorlängenoptimierung herangezogenen verstellbaren Element.

Die Form des optisch nichtlinearen Kristalles 102 ist nach der Darstellung in der Fig. 2 so ausgelegt, daß die Eintrittsfläche A des Kristalles 102 für die Grundwellenstrahlung G antireflektiv beschichtet ist. Die Beschichtung der Eintrittsfläche A (Eintrittsfenster) wird für einen Eintrittswinkel α der Grundwelle G von ca. 5° ausgelegt, so daß die Restreflektion kleiner als 0,2 % ist. Die Fläche B des optisch nichtlinearen Kristalles 102 wird optisch poliert, um eine Totalreflektion der Grundwelle G zu ermöglichen. Die Fläche C dient für die Grundwelle G als Reflektionsfläche und für die im Kristall 102 erzeugte 2. Oberwelle H als Auskoppelfläche und wird entsprechend für die Grundwelle G hochreflektierend und für die Oberwelle H antireflektiv beschichtet (dichroitische Schicht).

Die Ausführung als Ringresonator führt zwangsläufig zu Einfallswinkeln sowohl am gekrümmten Spiegel 101 als auch an der Eintrittsfläche A des Kristalls 102, die von Null verschieden sind. Der dadurch hervorgerufene Astigmatismus reduziert die Konversionseffizienz, da hierdurch nicht die gesamte Leistung der einfallenden Strahlung in die Grundmode des Resonators eingekoppelt werden kann. Daher werden die Winkel zwischen den Flächennormalen der Flächen A, B, C des Kristalls 102 so gewählt, daß der Einfallswinkel α in Fig. 2 so klein ist, daß der entstehende Effizienzverlust vernachlässigbar bleibt. Das ist bei Winkeln α < 10° etwa der Fall. Gleichzeitig muß durch die Wahl der Winkel zwischen den Flächennormalen dafür gesorgt werden, daß der für die Totalreflexion minimale Einfallswinkel an der Fläche B nicht unterschritten wird. Um eine optimale Effizienz der Frequenzkonversion zu erreichen, muß der Winkel θ zwischen der optischen Achse D und dem Grundwellenstrahl G die Bedingung für Phasenanpassung erfüllen.

Die Erfindung ist nicht auf die hier beschriebenen Ausführungsbeispiele beschränkt. Vielmehr ist es möglich, durch Kombination der Merkmale weitere Ausführungsformen zu realisieren.

## Patentansprüche

1. Verfahren zur Frequenzkonversion festfrequenter Laserstrahlung in einem halbmonolithischen Resonator, bestehend aus einem Spiegel (101) und einem optisch nichtlinearen Kristall (102), wobei die Resonatorlängenanpassung durch einen ringförmigen Piezoversteller (103) zwischen Spiegel (101) und Kristall (102) durchgeführt wird, und wobei der Kristall (102) drei Flächen (A, B, C) aufweist, von denen eine Eintrittsfläche (A) transmittierend und eine zweite und dritte Fläche (B und C) reflektierend wirken und so orientiert sind, daß sich zusammen mit dem Spiegel (101) ein Ringresonator ausbildet, in dem die eingestrahlte Lichtwelle umläuft.

2. Verfahren nach Anspruch 1, **dadurch gekennzeichnet, daß** der auf dem Piezoversteller (103) angebrachte Spiegel (101) oder der auf dem Piezoversteller (103) angebrachte Kristall (102) gegenüber einem ortsfesten Bezugspunkt mit Hilfe des Piezoverstellers (103) bewegt wird.

3. Verfahren nach Anspruch 1, **dadurch gekennzeichnet, daß** die Grundwelle (G) einen Eintrittswinkel (α) von unter zehn Grad bezüglich der Eintrittsfläche (A) des optisch nichtlinearen Kristalls (102) aufweist.

4. Verfahren nach Anspruch 1, **dadurch gekennzeichnet, daß** die Winkel der Flächen (A,B,C) des Kristalls (102) so gewählt sind, daß die Einfallswinkel (α) am Spiegel (101) und an der Eintrittsfläche (A) des Kristalls (102) so klein sind, daß der hierdurch hervorgerufene Astigmatismus vernachlässigbar bleibt.

5. Verfahren nach Anspruch 1, **dadurch gekennzeichnet, daß** der optisch nichtlineare Kristall (102) an der dritten Fläche (C) mit einer dichroitischen Schicht versehen wird, die für die Grundwellenstrahlung hochreflektierend und für die konvertierte Strahlung hochtransmittierend ist.

6. Verfahren nach Anspruch 1, **dadurch gekennzeichnet, daß** die Grundwellenstrahlung (G) an der zweiten Fläche (B) des optisch nichtlinearen Kristalls (102) totalreflektiert wird.

7. Verfahren nach Anspruch 1, **dadurch gekennzeichnet, daß** der Winkel (Θ) zwischen dem Grundwellenstrahl (G) und der optischen Achse (D) des Kristalls (102) so gewählt ist, daß die Bedingung für die Phasenanpassung bei der Frequenzkonversion erfüllt ist.

8. Verfahren nach Anspruch 1, **dadurch gekennzeichnet, daß** der Krümmungsradius des Spiegels (101) so gewählt wird, daß der Ringresonator eine Strahltaille innerhalb des Kristalls (102) ausbildet, die optimal bezüglich der Effizienz der Frequenzkonversion ist.

9. Vorrichtung zur Frequenzkonversion festfrequenter Laserstrahlung in einem halbmonolithischen Resonator, bestehend aus einem Spiegel (101) und einem optisch nichtlinearen Kristall (102), wobei der Kristall (102) drei Flächen (A, B, C) aufweist und wobei zwischen den einen Ringresonator bildenden optischen Elementen Kristall (102) und Spiegel (101) ein ringförmiger Piezoversteller (103) mit zentraler Öffnung (104) zur Durchstrahlung der Resonatorstrahlung so angeordnet ist, daß der Abstand zwischen dem Spiegel (101) und dem Kristall (102) mit einer an den Piezoversteller (103) angelegten elektrischen Spannung verändert werden kann.

10. Vorrichtung nach Anspruch 9, **dadurch gekennzeichnet, daß** der Kristall (102) ein unsymmetrischer optischer nichtlinearer Kristall (102) ist, dessen Eintrittsfläche (A) beschichtet ist, dessen andere Fläche (B) optisch poliert ist und dessen dritte Fläche (C) als Reflektionsfläche für die Grundwelle (G) hochreflektierend und als Auskoppelfläche für die vom Kristall (102) erzeugte 2.Oberwelle (H) antireflektiv beschichtet ist.

11. Vorrichtung nach Anspruch 10, **dadurch gekennzeichnet, daß** die Beschichtung der Eintrittsfläche (A) für einen Eintrittswinkel (α) der Grundwelle(G) von unter 10° ausgelegt ist.

## Claims

1. Method for frequency conversion of fixed frequency laser radiation in a semi-monolithic resonator, consisting of a mirror (101) and an optically non-linear crystal (102), whereby the resonator length adaptation is implemented by an annular piezo-adjuster (103) between the mirror (101) and the crystal (102) , the crystal (102) having three surfaces (A,B,C), of which one entry surface (A) acts as a transmitter and a second and third surface (B and C) as a reflector and which surfaces are oriented in such a way as to form together with the mirror (101) a ring resonator in which the irradiated light wave circles.

2. Method according to claim 1, **characterised in that** the mirror (101) secured on the piezo-adjuster (103) or the crystal (102) secured on the piezo-adjuster (103) is agitated against a fixed local point of reference with the aid of the piezo-adjuster (103).

3. Method according to claim 1, **characterised in that** the fundamental wave (G) exhibits an entry angle (α) of less than 10° with reference to the entry surface (A) of the optically non-linear crystal (102).

4. Method according to claim 1, **characterised in that** the angles of the surfaces (A,B,C) of the crystal (102) are chosen such that the angles of incidence (α) at the mirror (101) and at the entry surface (A) of the crystal (102) are so small that the astigmatism caused by this remains negligible.

5. Method according to claim 1, **characterised in that** the optically non-linear crystal (102) is provided with a dichroic coating on the third surface (C) which is highly reflecting for the fundamental wave radiation and highly transmittable for the converted radiation.

6. Method according to claim 1, **characterised in that** the fundamental wave radiation (G) is totally reflected at the second surface (B) of the optically non-linear crystal (102).

7. Method according to claim 1, **characterised in that** the angle (Θ) between the fundamental beam (G) and the optical axis (D) of the crystal (102) is chosen such that the precondition for phase adaptation during frequency conversion is fulfilled.

8. Method according to claim 1, **characterised in that** the radius of curvature of the mirror (101) is chosen such that the ring resonator forms a beam-waistline within the crystal (102) which is optimal with reference to the efficiency of the frequency conversion

9. Device for frequency conversion of fixed frequency laser radiation in a semi-monolithic resonator, consisting of a mirror (101) and an optically non-linear crystal (102), whereby the crystal (102) exhibits three surfaces (A,B,C) and an annular piezo-adjuster (103) with a central opening (104) for passage of the resonator radiation is arranged between the ring resonator forming optical elements of a crystal (102) and a mirror (101) in such a way that the distance between the mirror (101) and the crystal (102) can be changed by means of an electrical voltage applied to the piezo-adjuster (103).

10. Device according to claim 9, **characterised in that** the crystal (102) is an unsymmetrical optically non-linear crystal (102) of which the entry surface (A) is coated, of which the other surface (B) is optically polished and of which the third surface (C) has a highly reflective coating as reflection surface for the fundamental wave (G) and an antireflective coating as de-coupling surface for the 2nd harmonic wave (H) generated by the crystal (102).

11. Device according to claim 10, **characterised in that** the coating of the entry surface (A) is so designed that the entry angle (α) of the fundamental wave (G) is less than 10°.

## Revendications

1. Procédé pour la conversion de fréquence d'un rayonnement laser à fréquence fixe dans un résonateur semi-monolithique, consistant en un miroir (101) et un cristal optiquement non-linéaire (102), où l'ajustement de longueur du résonateur est exécuté par un composant d'ajustage piézo (103) entre le miroir (101) et le cristal (102), et où le cristal (102) présente trois surfaces (A, B, C) dont une surface d'entrée (A) agit comme transmettrice, et une deuxième et une troisième surfaces (B et C) comme réflectrices, étant orientées de manière à former avec le miroir (101) un résonateur annulaire où circule l'onde lumineuse irradiée.

2. Procédé selon la revendication 1, **caractérisé en ce que** le miroir (101) appliqué sur le composant d'ajustage piézo (103), ou le cristal (102) appliqué sur le composant d'ajustage piézo (103) sont déplacés par rapport à un point de référence fixe au moyen du composant d'ajustage piézo (103).

3. Procédé selon la revendication 1, **caractérisé en ce que** l'onde fondamentale (G) présente un angle d'entrée (α) inférieur à dix degrés par rapport à la surface d'entrée (A) du cristal optiquement non-linéaire (102).

4. Procédé selon la revendication 1, **caractérisé en ce que** les angles des surfaces (A, B, C) du cristal (102) sont choisis de manière à limiter les angles d'incidence (α) sur le miroir (101) et sur la surface d'entrée (A) du cristal (102), pour maintenir à une valeur négligeable l'astigmatisme ainsi produit.

5. Procédé selon la revendication 1, **caractérisé en ce que** le cristal optiquement non-linéaire (102) est pourvu sur la troisième surface (C) d'une couche dichroïque hautement réflectrice pour le rayonnement d'onde fondamentale et hautement transmettrice pour le rayonnement converti.

6. Procédé selon la revendication 1, **caractérisé en ce que** le rayonnement d'onde fondamentale (G) est intégralement réfléchi sur la deuxième surface (B) du cristal optiquement non-linéaire (102).

7. Procédé selon la revendication 1, **caractérisé en ce que** l'angle (θ) entre le faisceau d'onde fondamentale (G) et l'axe optique (D) du cristal (102) est choisi de manière à remplir la condition pour l'ajustement de phase à la conversion de fréquence.

8. Procédé selon la revendication 1, **caractérisé en ce que** le rayon de courbure du miroir (101) est choisi de manière à ce que le résonateur annulaire forme un col de faisceau à l'intérieur du cristal (102), optimal pour l'efficacité de la conversion de fréquence.

9. Dispositif'pour la conversion dé fréquence d'un rayonnement laser à fréquence fixe dans un résonateur semi-monolithique, consistant en un miroir (101) et un cristal optiquement non-linéaire (102), où le cristal (102) présente trois surfaces (A, B, C) et où un composant d'ajustage piézo (103) à ouverture centrale (104), pour le passage du rayonnement du résonateur est disposé entre les éléments optiques cristal (102) et miroir (101) formant un résonateur annulaire, de manière à pouvoir varier la distance entre le miroir (101) et le cristal (102) avec une tension électrique appliquée sur le composant d'ajustage piézo (103).

10. Dispositif selon la revendication 9, **caractérisé en ce que** le cristal (102) est un cristal asymétrique optiquement non-linéaire (102), dont la surface d'entrée (A) est revêtue, dont l'autre surface (B) est optiquement polie et dont la troisième surface (C) présente un revêtement hautement réflecteur en tant que surface de réflexion pour l'onde fondamentale (G) et un revêtement anti-réflecteur en tant que surface de déclenchement pour la 2^{e} onde harmonique (H) générée par le cristal (102).

11. Dispositif selon la revendication 10, **caractérisé en ce que** le revêtement de la surface d'entrée (A) est prévu pour un angle d'entrée (α) de l'onde fondamentale (G) inférieur à 10°.
